# EUROPEAN PATENT SPECIFICATION

(11) **EP 2 713 589 B1**
(45) Date of publication and mention of the grant of the patent: **14.11.2018**
(21) Application number: 13004606.3
(22) Date of filing: 20.09.2013
(51) Int. Cl.: H04M 3/42

(54) **File management system and method, and file management program for telephone conversations**
Dateiverwaltungssystem und -verfahren, und Dateiverwaltungsprogramm für Telefongespräche
Système et procédé de gestion de fichier et programme de gestion de fichier pour des conversations téléphoniques

(30) Priority: 26.09.2012 JP 2012212812
(43) Date of publication of application: 02.04.2014
(73) Proprietor: Hitachi Information & Telecommunication Engineering, Ltd., Kanagawa 220-6122 (JP)
(72) Inventor: Koyama, Toshiaki, Kanagawa, 259-0157 (JP); Yamagishi, Toyoki, Kanagawa, 259-0157 (JP)
(74) Representative: Strehl Schübel-Hopf & Partner

(56) References cited:
- US-A- 5 982 857
- US-A- 6 058 163
- US-B1- 6 252 947

## Description

### BACKGROUND OF THE INVENTION

### 1. Field of the Invention

The present invention relates to file management system and method, and a file management program, and more particularly relates to retention and management of telephone call record files generated in a call center and an office and files of images captured by a monitor camera and so forth.

### 2. Description of the Related Art

The files of telephone call records (voices) occurring in the call center, the office of the sales department or the like and the files of images of persons, background video images and so forth captured by the monitor camera and so forth (hereinafter, referred to as a "record file" or "record files") are retained in a file management device as records incidental to various activities. For example, when the record file of telephone calls is to be retained and managed, information relating to specification of a phone number (or information such as an IP address or the like with which a connecting destination is identified), date and time of acquisition (that the file has been acquired), or a place of acquisition, such as the information of identifying the object to be acquired, information on a situation upon acquisition and so forth are retained in the file management device as attribute information by relating them to the record file concerned. In general, the record file is stored in a storage in the file management device and the attribute information is stored in a database which is under the control of the file management device by being related to the storage, that is, a storage location that the record file has been stored. The attribute information is used by searching database later when the record file is to be referred to or as required.

It is desirable to install the storage at a secure location, that is, the storage of the record file in a place such as a data center or the like where the files are readily managed collectively from the viewpoint of insurance of the security. Therefore, it becomes inevitable to transmit the record files from the call center (having a file collection device) that collects the record files to the file management device installed in a remote location over a network.

As the related art of this kind, for example, in Japanese Patent Laid-Open No. 2010-219734, there is described a telephone call records central management system that voice files and attribute files of the voice files generated in offices which are decentralized such as sales offices, branch offices and so forth are transmitted to a central management server over the network such as a WAN (Wide Area Network) or the like and are registered in the database of the central management server so as to unitarily manage them.

However, since the capacity of the record file is large, such a disadvantage occurs that in a method that every time one record file is created on the side of the file collection device, the record file is transferred to the file management device, an amount of the network bandwidth to be used for file transfer is large and a delay is induced in transfer of other pieces of data which are high in priority. Therefore, in transfer of record files, there is conceivable a method of transferring the record files collectively in a time zone that there is room in the network bandwidth such as the nighttime. Therefore, in the file collection device, there is adopted a method of retaining collected record files in a storage until they are transmitted to the file management device and transmitting the record files to the file management device when there is room in the network.

In the unitary telephone call records central management system described in Japanese Patent laid-Open No. 2010-219734, if the record files and their attribute files which are collected and retained by a local server are collectively transferred from the local server to a central management server by utilizing the time zone that there is room in the network, the load which is imposed on the network for file transfer will be reduced. However, since the many record files and attribute files are retained in the local servers in the decentralized offices until the record files and the attribute files are transferred to and collectively retained in the central management server, it is difficult to refer to them unitarily.

As a solution of the above-mentioned disadvantage, there is also conceivable, for example, a method that every time one record file is acquired by each local server, the record file is transferred to the central management server. However, in this method, the frequency of file transfer in the on-duty time zone in the daytime that many record files are acquired is increased and it is difficult to transfer the files by selecting a time zone that the network load is small.

US 6 252 947 B1 discloses a system and method for recording and playing back data from plural decentralized playback servers. The two-part form of the present independent claims is based on this reference.

The present invention aims to reduce the line cost by transferring record files from a local place to a center by utilizing a time zone that the bandwidth of a network is readily ensured in a file management system that the record files which have been created in the local places are managed in the center.

In addition, the present invention should makes it possible to refer to a target record file by transmitting attribute information of the record file from the local place to the center and managing the attribute information in the center prior to transmission of the record file and searching the attribute information in accordance with a request from a terminal.

In addition, the present invention also aims to readily refer to the target record file which is not yet transmitted to the center and is still saved in the local place.

### SUMMARY OF THE INVENTION

The above objects of the present invention are achieved by the system and method defined in the appended independent claims. The subclaims relate to preferred embodiments.

Disclosed is a file management system that transmits a record file of voice data or image data which is created by a first device to a second device over a network and manages the record file in the second device, in which
the first device includes a record file creation unit for creating the record file including the voice data or the image data, an attribute file creation unit for creating an attribute file including attribute information indicating the attribute of the record file, a first storage unit for storing the record file which has been created by the record file creation unit and a transfer control unit for controlling transfer of the record file and the attribute file to the second device,
the second device includes an attribute processing unit for creating management information including identification information used for identifying at least the record file and information on the first storage unit or a second storage unit which serves as a storage location of the record file on the basis of the attribute information in the attribute file which has been transmitted and received from the first device over the network and the second storage unit for storing the management information which has been created by the attribute processing unit on the basis of the attribute information and the record file which has been transmitted and received from the first device over the network, and
the attribute processing unit changes information on the storage location of the record file in the management information corresponding to the record file which has been transmitted and received from the first device to information in the second storage unit.

Further disclosed is a file management system that transmits a record file of voice data or image data which is created by a first device to a second device via a network, retains the record file in a storage unit and manages the record file to allow a terminal to refer to the record file retained in the storage unit, in which
the first device includes a record file creation unit for creating the record file including the voice data or the image data, an attribute file creation unit for creating an attribute file including attribute information indicating the attribute of the record file, a first storage unit for storing the record file which has been created by the record file creation unit, a transfer control unit for controlling transfer of the record file and the attribute file to the second device and an input/output unit for controlling writing and reading-out of the record file into and from the first storage unit,
the second device includes an attribute processing unit for creating management information including identification information used for identifying at least the record file and information on the first storage unit or a second storage unit which serves as a storage location of the record file on the basis of the attribute information in the attribute file which has been transmitted and received from the first device over the network, the second storage unit for storing the management information which has been created by the attribute processing unit on the basis of the attribute information and the record file which has been transmitted and received from the first device over the network and a reference processing unit for reading out the management information stored in the second storage unit and supplying the management information to the terminal in accordance with a request from the terminal,
the attribute processing unit changes information on the storage location of the record file in the management information corresponding to the record file which has been transmitted and received from the first device to information in the second storage unit,
when the target record file is stored in the second storage unit, the reference processing unit reads out the record file from the second storage unit and transmits the record file to the terminal in accordance with a request from the terminal, and
when the target record file is stored in the first storage unit of the first device, the input/output unit reads out the target record file from the first storage unit and transmits the target record file to the terminal.

Further disclosed is a file management system that creates a record file of voice data or image data and transmits the record file to a second device that manages the record file, including
a record file creation unit for creating the record file including the voice data or the image data, an attribute file creation unit for creating an attribute file including attribute information indicating the attribute of the record file, a first storage unit for storing the record file which has been created by the record file creation unit and a transfer control unit for controlling transfer of the record file and the attribute file to the second device, wherein
the transfer control unit transmits the attribute information corresponding to the record file stored in the first storage unit to the second device and thereafter transmits the record file corresponding to the attribute information which has already been transmitted to the second device and stored in the first storage unit to the second device at a time which has been set in advance or in a time zone that a network load is small.

Further disclosed is a file management system that acquires a record file of voice data or image data created by a first device, stores the record file in a storage unit and manages the record file, and supplies the record file stored in the storage unit in accordance with a request from a terminal, including
an attribute processing unit for creating management information including identification information used for identifying at least the record file and information on a first storage unit or a second storage unit which serves as a storage location of the record file on the basis of an attribute information in an attribute file which has been transmitted and received from the first device over a network, the second storage unit for storing the management information which has been created by the attribute processing unit on the basis of the attribute information and the record file which has been transmitted and received from the first device over the network and a reference processing unit for reading out the management information stored in the second storage unit and supplying the management information to the terminal in accordance with a request from the terminal, wherein
the attribute processing unit changes information on the storage location of the record file in the management information corresponding to the record file which has been transmitted and received from the first device to information in the second storage unit,
when the target record file is stored in the second storage unit, the reference processing unit reads out the record file from the second storage unit and transmits the record file to the terminal in accordance with a request from the terminal.

Further disclosed is a file management method of transmitting a record file of voice data or image data created by a first device to a second device over a network and managing the record file in the second device,
including
in the first device,
the record file creation step of creating the recording file including the voice data or the image data, the attribute file creation step of creating an attribute file including attribute information indicating the attribute of the record file, the first storage step of storing the record file created in the record file creation step in a first storage unit and the transfer control step of controlling transfer of the record file and the attribute file to the second device, and
further including
in the second device,
the attribute processing step of creating management information including identification information used for identifying at least the record file and information on the first storage unit or a second storage unit which serves as a storage location of the record file on the basis of attribute information of the attribute file which has been transmitted and received from the first device over the network and the second storage step of storing the management information created on the basis of the attribute information in the attribute process step and the record file which has been transmitted and received from the first device over the network, wherein
in the attribute processing step, the information on the storage location of the record file in the management information corresponding to the record file which has been transmitted and received from the first device is changed to information in the second storage unit.

Further disclosed is a file management method of transmitting a record file of voice data or image data created by a first device to a second device over a network, retaining the record file in a storage unit and managing the record file in the storage unit so as to allow a terminal to refer to the record file stored in the storage unit,
including
in the first device,
the record file creation step of creating the recording file including the voice data or the image data, the attribute file creation step of creating an attribute file including attribute information indicating the attribute of the record file, the first storage step of storing the record file created in the record file creation step in a first storage unit, the transfer control step of controlling transfer of the record file and the attribute file to the second device and the input/output step of controlling writing and reading out of the record file into and from the first storage unit, and
further including
in the second device,
the attribute processing step of creating management information including identification information used for identifying at least the record file and information on the first storage unit or a second storage unit which serves as a storage location of the record file on the basis of attribute information of the attribute file which has been transmitted and received from the first device over the network, the second storage step of storing the management information created on the basis of the attribute information in the attribute process step and the record file which has been transmitted and received from the first device over the network and the reference processing step of reading out the management information stored in the second storage unit and supplying the management information to the terminal in accordance with a request from the terminal, the steps being performed by the second device, wherein
in the attribute processing step, information on the storage location of the record file in the management information corresponding to the record file which has been transmitted and received from the first device is changed to information of the second storage unit,
in the reference processing step, when the target record file is stored in the second storage unit, the record file is read out from the second storage unit and is transmitted to the terminal in accordance with the request from the terminal, and
when the target record file is stored in the first storage unit of the first device, the target record file is read out from the first storage unit and is transmitted to the terminal.

A file management program according to an embodiment of the present invention is preferably a file management program that makes a server execute the respective steps implementing the above-mentioned file management method to manage a record file.

According to an embodiment of the present invention, in the file management system that manages the record files created in the local places in the center, a reduction in line cost is allowed by transferring the record files from the local places to the center by utilizing the time zone that the network bandwidth used for file transfer is readily ensured.

In addition, it is allowed to supply the target record file to the terminal by transmitting the attribute information of the record file from the local place to the center and managing the attribute information in the center prior to transmission of the record file and searching the attribute information in accordance with the request from the terminal.

Further, it is allowed to readily refer to the record file which is not yet transferred to the center and is still retained in the local place in accordance with the request from the terminal.

### BRIEF DESCRIPTION OF THE DRAWINGS

FIG. 1 is a diagram illustrating a configuration example of a record file management system according to one embodiment of the present invention;
FIG. 2 a diagram illustrating a configuration example of a local device in the record file management system according to one embodiment of the present invention;
FIG. 3 is a diagram illustrating a configuration example of a center device in the record file management system according to one embodiment of the present invention;
FIG. 4 is a diagram illustrating a format configuration example of an attribute file in one embodiment of the present invention;
FIG. 5 is a diagram illustrating a configuration example of a management table for attribute information in one embodiment of the present invention;
FIG. 6 is a sequence diagram illustrating an example of a series of operations of transferring and retaining record files in one embodiment of the present invention;
FIG. 7 is a sequence diagram illustrating an example of an operation of referring to a record file from a terminal in one embodiment of the present invention;
FIG. 8 is a diagram illustrating an example of a screen used to search for the record file from the terminal in one embodiment of the present invention;
FIG. 9 is a diagram illustrating an example of a screen displaying a result of search for the record file from the terminal; and
FIG. 10 is a diagram illustrating a configuration example of a record file management system according to another embodiment of the present invention.

### DETAILED DESCRIPTION OF THE PREFERRED EMBODIMENTS

In the following, preferred embodiments of the present invention will be described in detail with reference to the accompanying drawings.

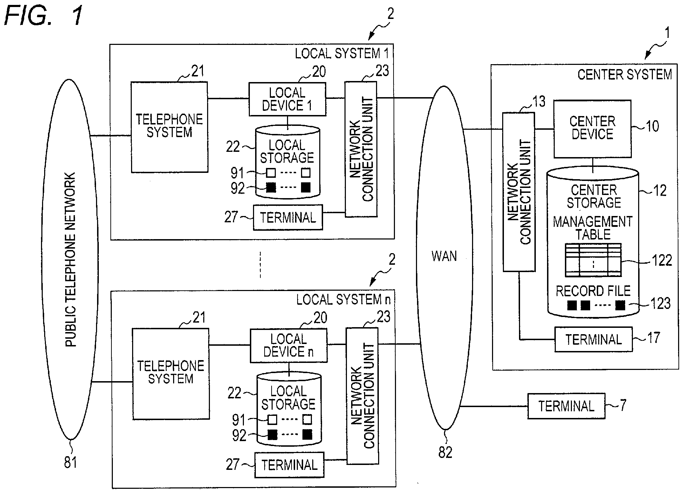

FIG. 1 illustrates a configuration example of a record file management system according to one embodiment.

The present embodiment is applied to a contact center management system that telephone call record files (hereinafter, simply referred to as a record file or record files) generated in a call center or centers located in one or a plurality of local places are transferred to a management device installed in the center and retained in the center.

In one base or a plurality of bases where a call center/call centers is/are located, there is/are formed one or a plurality of local system(s) 2 each including a telephone system 21 which is connected to a public telephone network 81. One or the plurality of local system(s) is/are connected to a center system 1 over a network 82 such as the WAN or the like. A terminal 7 used for monitoring an operating status or the like of an operator terminal of the telephone system 21 and for referring to record files (described later) is connected to the WAN 82 in some cases.

In the local system 2, the telephone system 21 includes an IP-PBX (Internet Protocol Private Branch eXchange) which is connected to the public telephone network 81 and the operator terminal that performs reception of a telephone call which is received through the IP-PBX. The local system 2 further includes a local device 20, a local storage 22, a network connection unit 23 which is connected to the WAN and a terminal 27 which is connected to the network connection unit 23.

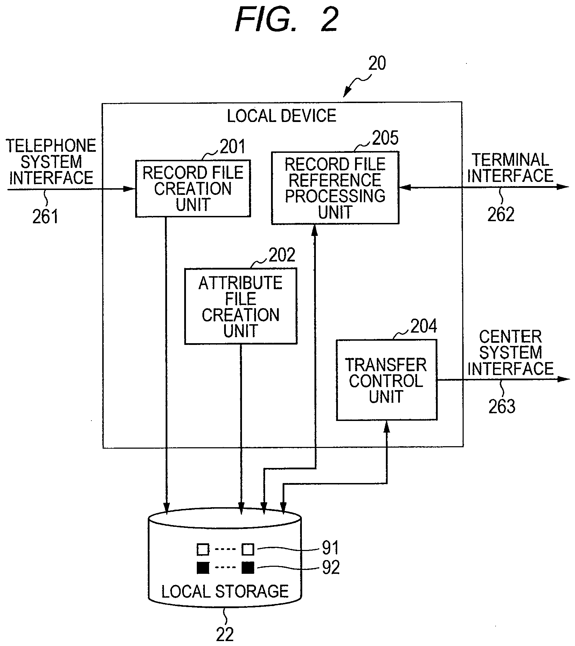

The local device 20 is configured, for example, by a server device and acquires a telephone call packet (for example, an RTP (Real-time Transport Protocol) packet) which is transmitted and received between the IP-PBX of the telephone system 21 and an internal telephone set, and creates a record file 92 on the basis of the packet, and further acquires attribute information used for managing the record file 92 and creates an attribute file 91. The record file and attribute file so created are temporarily stored in the local storage 22 and are then transmitted to the center system 1. (A detailed configuration of the local device 20 will be described later with reference to FIG. 2.)

The record files 92 which have been temporarily stored in the local storage 22 are then collectively transmitted to the center system 1 in a predetermined time zone (that is, a time zone in the nighttime that the network load is small) and are retained in a storage 12 of the center system 1 and managed. (A description will be made later with respect to this point.)

The terminal 27 is a terminal for manager that includes an input device, a display and a processor such as a personal computer (PC) and is allowed to monitor the operating status of the operator terminal and to refer to the record file which has been created in the above- mentioned manner. Although the record files and the attribute files thereof which have been created by the local devices 20 are record files to be unitarily managed by the center system 1, they are retained in the local storage 22 for a predetermined period as one feature of the present embodiment. Thus, it is allowed to read out the record file which has been stored in the local storage 22 and to supply the read-out record file to the terminal 27 in accordance with a request from the terminal 27 within the local system 2. Since the terminal 27 is allowed to readily acquire the record file within the local system 2 without using the WAN 82, a reduction in line cost of the network is allowed.

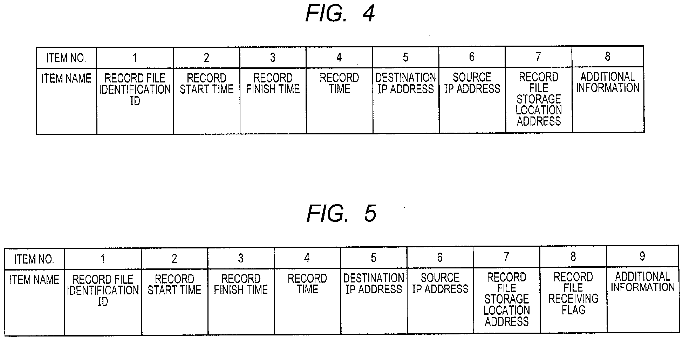

Here, the record file and the attribute file thereof will be described. The record file is a file of voices of a telephone call transmitted and received between a caller and an operator, that is, a file of voices made, for example, for a purchase order, service request and change, a complaint (a claim), confirmation of the contents of a contract from a customer and so forth. Attribute information which would be created as the attribute file is information which is characteristic to the telephone call (that is, the record file) and includes start time and finish time of the telephone call transmitted and received between the operator and the caller, a source IP address (a port IP address on the extension side of the PBX), a destination IP address (an IP address of an extension telephone) and so forth. The attribute information is, so to speak, physical basic attribute information. (Incidentally, a configuration of the attribute file will be described later with reference to FIG. 4.)

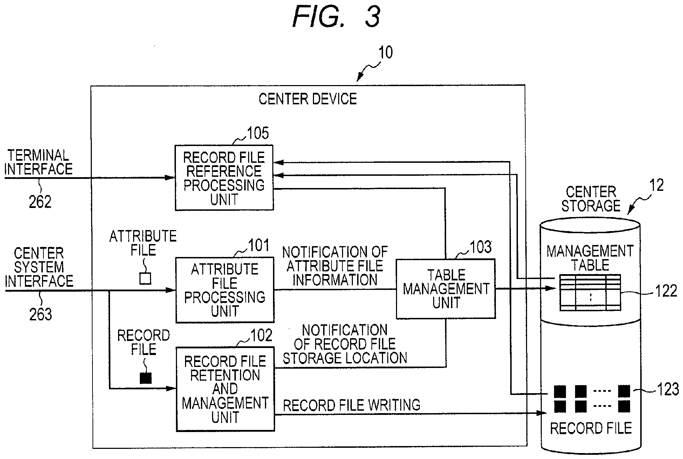

Next, the center system 1 includes a center device 10, a center storage 12, a network connection unit 13 which is connected to the WAN and a terminal which is connected to the network connection unit 23. The center device 10 is, for example, a server device (a detailed configuration thereof will be described later with reference to FIG. 3), and mainly performs a process of retaining the record files and the attribute files which have been collected from the local systems 2 and a process of supplying the record file which is retained in accordance with a request from the terminal 7, 17 or the like.

The center storage 12 stores a management table 122 for managing attribute information that the attribute files indicates and record files 123 (the same as the files 92) which are collected from the respective local systems 2. A configuration of the management table 122 will be described later with reference to FIG. 5.

The terminals 7 and 17 are terminals also for the manager such as the personal computers (PCs) similarly to the terminal 27 and used to monitor the operating status of the operator terminal and to refer to the record file stored in the center storage 12.

FIG. 2 illustrates a configuration example of the local device 20.

The local device 20 includes a record file creation unit 201 for acquiring a telephone call packet from an interface 261 of the telephone system 21 and creating a record file, an attribute file creation unit 202 for creating an attribute file which includes attribute information (see FIG. 4) such as record start time and finish time, recipient information and so forth upon creation of the record file, a transfer control unit 204 for controlling transfer of the attribute file 91 and the record file 92 to the center device 10 via an interface 263, and a record file reference processing unit 205 for reading out the record file 92 stored in the local storage 22 in accordance with an access request from the terminal via an interface 262.

Although a hardware configuration of the local device 20 is not illustrated, the local device 20 includes a processor for executing a program, a memory or memories for storing data and the program which is expected to be executed and so forth. Functions of the above-mentioned respective units are implemented by executing the program by the processor.

The local storage 22 stores the record file 92 which has been created by the record file creation unit 201 and the attribute file 91 which has been created by the attribute file creation unit 202 and corresponds to the record file 92. Incidentally, although, in FIG. 2, the local storage 22 for storing the attribute file 91 and the corresponding record file 92 is illustrated on the outer side of the local device 20, the local storage 22 may be contained in the local device 20.
FIG. 3 illustrates a configuration example of the center device 10.

The center device 10 includes an attribute file processing unit 101 for performing a process of extracting information to be retained in the management table 122 from the received attribute file and a process of updating the contents of the management table by relating the contents to the record file identification ID, a record file retention and management unit 102 for storing the received record file in the center storage 12, a table management unit 103 for writing and reading out information into and from the management table 122 which is stored in the center storage 12, and a record file reference processing unit 105 for searching the management table 122 and reading out the record file stored in the center storage 12 in accordance with a reference request from the terminal 17. Incidentally, a configuration of the management table 122 will be described later with reference to FIG. 5.

The attribute file received from the local device 20 is processed by the attribute file processing unit 101 and information which is desirable for an updating process in the table management unit 103 is sent to the table management unit 103. Thus, the contents of the management table 122 are updated.

When the record file has been received, the record file retention and management unit 102 stores the received record file in the center storage 12. Sine updating of record file storage location information in the management table 122 becomes inevitable simultaneously with storage of the record file, the storage location information is sent to the table management unit 103.

The table management unit 103 switches a receiving flag of the attribute information corresponding to the record file concerned in the management table from "0" (not-received) to "1" (received).

Although a hardware configuration of the center device 10 is not illustrated, the center device 10 includes a processor for executing a program, a memory or memories for storing data and the program which is expected to be executed and so forth, and functions of the above mentioned respective units are implemented by executing the program by the processor.

Incidentally, although in FIG. 3, the center storage 12 for storing the attribute management table 122 and the record files 123 is illustrated on the outer side of the center device 10, the center storage 12 may be contained in the center device 10.

When a reference request for the record file 123 which has been stored (or may be possibly stored) in the center storage 12 has been issued from the terminal 17 (or 7), the record file reference processing unit 105 accepts the request, the table management unit 103 searches the management table 122 for the record file 123 and notifies the terminal 17 (7) of a result of search.

When the record file which would be the object of the reference request is stored (when the receiving flag is "1") in the center storage 12 as a result of reference to the receiving flag in the management table 122, the target record file 123 is read out from the center storage 12 and is transmitted to the terminal 17 (or 7). On the other hand, when the receiving flag of the management table 122 is referred to and the record file which would be the object of the reference request is not stored in the center storage 12 (when the receiving flag is "0"), "Record File Storage Location Address" in the management table 122 is referred to and an instruction to read out the record file is transmitted to the local storage 22 of the local system 2 that the storage location address concerned indicates.

FIG. 4 illustrates a format configuration example of an attribute file.

The attribute file 91 includes an identification ID for identifying a record file concerned, a record start time indicating the time that recording of a telephone call with the caller via the telephone system 21 is started, a record finish time indicating the time that recording is finished, a record time, a source IP address (a port IP address on the extension side of the PBX) of the record file and a destination IP address (an IP address of an extension telephone), a storage location address indicating the storage location of the record file concerned, and additional information.

Here, the source IP address and the destination IP address are acquired from a header field of a telephone call packet concerned. In addition, the storage location address is an address (for example, a local device address and directory information in the local storage concerned) of the local device that the record file concerned is stored). Further, the additional information includes information on, for example, telephone numbers of both persons who talk on the phone, kinds of sending and receiving directions and so forth which are obtained by monitoring a packet for call control.

FIG. 5 illustrates a configuration example of a management table for attribute information.

The attribute information management table 122 includes the identification ID for identifying the record file concerned, the record start time indicating the time that recording of the telephone call with the caller via the telephone system 21 is started, the record finish time indicating the time that recording is finished, the record time, the source IP address (the port IP address on the extension side of the PBX) of the record file and the destination IP address (the IP address of the extension telephone), the storage location address indicating the storage location of the record file concerned, a record file receiving flag and the additional information.

Here, the information other than the receiving flag is acquired from the above-mentioned attribute file. The receiving flag is information indicating whether the record file corresponding to the attribute information which has been acquired in advance has been received from the local device 20. When received, it is indicated with "1", while when not received, it is indicated with "0".

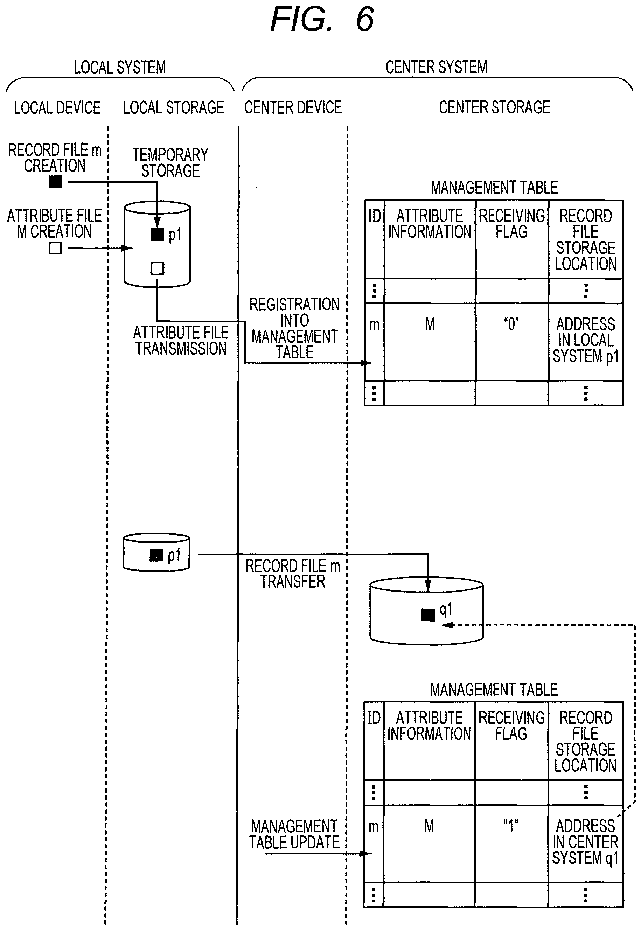

Next, operations of transferring and retaining a record file will be described with reference to FIG. 6.

In the local device 20, a telephone call packet is acquired from the interface 261 of the telephone system 21, the record file creation unit 201 creates the record file 92 and the attribute file creation unit 202 creates the attribute file 91 of the record file 92. The created record file 92 and attribute file 91 thereof are stored in the local storage 22.

Here, the attribute file creation unit 202 generates peculiar information (the record file identification ID) for identifying the record file and gives the generated information to the record file concerned. The record file 92 to which the record file identification ID has been given is stored in the local storage 22. Further, the attribute file creation unit 202 creates the attribute file that "M" is recorded in the record file identification ID of the attribute file 91 and an address "p1" of the local storage 22 is recorded in the record file storage location address.

The transfer control unit 204 sequentially (every time each attribute file is created) transmits the attribute files 91 so created as mentioned above to the center system 1 via the interface 263.

In the center device 10 of the center system 1, the attribute file processing unit 101 creates management information to be written into the management table 122 from the received attribute files. In the example in FIG. 6, the record file identification ID is "M", the record file storage location address is the address "p1" of the local storage 22, and the receiving flag is "0" indicating the not-received state because the record file is not yet received. The created management information is written into the management table 122 of the center storage 103 by the table management unit 103.

The attribute files of many record files which have been created by the local devices 20 of the plurality of local systems 2 in the above-mentioned manner are collected in the center device 10 and many pieces of management information are registered into the management table. Since, in general, many record files are generated in the duty time zone (the daytime) in offices, the attribute files thereof are collected in the center device in the daytime. However, at this point in time, the center device 10 is in a state that the many record files are not yet received.

Then, an input/output unit 203 of the local device 20 reads out the not-transmitted record files 92 which are stored in the local storage 22 and the transfer control unit 204 transmits the read-out record files to the center system 1 in a time zone that there is room in bandwidth of the network such as in the nighttime, for example, at a time which has been determined in advance (past AM12). Here, since the attribute files 91 corresponding to the not transmitted record files 92 are remained in the local storage 22, it is allowed to read out the record file concerned on the basis of the record file identification ID of each attribute file 91. After all the not-transmitted record files have been transmitted to the center system 1, the record files 92 concerned and the attribute files 91 thereof are deleted from the local storages 22.

In the center device 10 of the center system 1, the record file retention and management unit 102 stores the received record file m in a record file storage area in the center storage 12. Then, an address (an address in the center storage) q1 that the record file concerned has been stored is sent to the table management unit 103. The table management unit 103 switches the receiving flag of the attribute information corresponding to the record file concerned m in the management table 122 from "0" (not-received) to "1" (received). The storage location addresses and the receiving flags for all the received record files are changed and the contents of the management table 122 are updated in the above-mentioned manner.

Incidentally, in the present embodiment, every time the attribute file creation unit 202 creates one attribute file, the attribute file is transmitted to the center system 1 by the transfer control unit 204. However, in an alternative example, the created attribute files may be temporarily stored in the local storage 22 and one or the plurality of attribute files which have been accumulated in the local storage 22 may be collectively transmitted to the center system 1 later every fixed time (for example, every hour).

In addition, in the present embodiment, the record file 92 and the attribute file 91 thereof which have been transmitted to the center system 1 are deleted from the local storage 22. However, in an alternative example, the record file 92 may not be deleted from the local storage 22 still after the record file 92 has been transmitted to the center system 1 and may be remained in the local storage 22 for the time being (for example, about 48 hours or one week), and the record file 92 stored in the local storage 22 may be supplied to the terminal 27 in response to an access request from the terminal 27. In the above-mentioned example, it is aimed that the local storage be used as a cache mechanism for the time being after the record file 92 has been transmitted to the center system 1. Comparatively many access requests for search for the record files are issued from within the same local system 2 in the beginning of creation of the record files 92. Therefore, the load on the network when the record files 92 in the same local system 2 are transferred to the terminal 27 is low and hence file transfer from the same local system 2 is efficient.

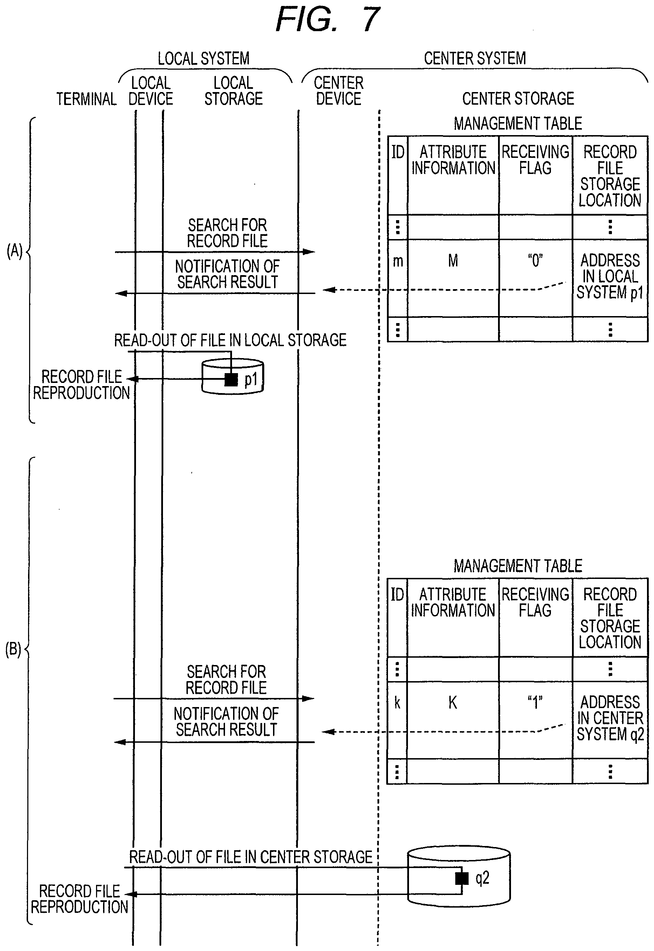

Next, an operation of referring to a record file from a terminal will be described with reference to FIG. 7.
(A) of FIG. 7 illustrates a case that the record file concerned is present in a local system and (B) illustrates a case that the record file concerned is present in the center system.

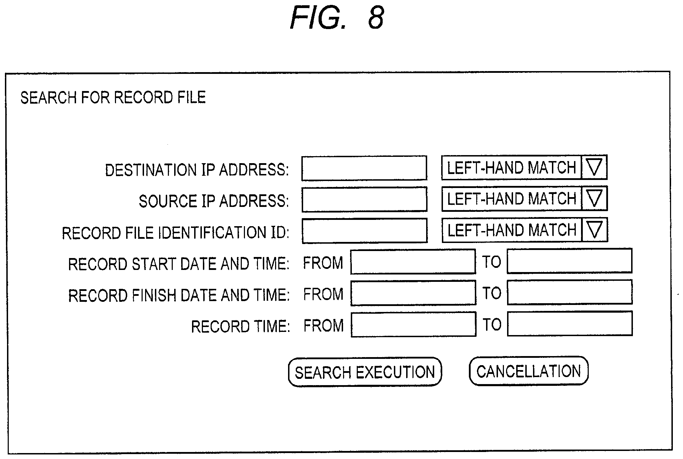

It is assumed that a manager operates the terminal 7, 17 or 27 and displays a search screen as illustrated in FIG. 8 on a display screen of the terminal so as to search for the record file concerned. In the search screen for the record file, the attribute information which is basically included in the attribute file is included in the search items. The manager operates the input device and designates the item to be searched for in the search screen and the contents thereof, by which a search condition is created. When the "Search Execution" button is operated, the search request with the search condition added is issued from the terminal. The search request from the terminal 27, the search request from the terminal 7 and the search request from the terminal 17 are transferred to the center device 10 of the center system 1 respectively via the network connection unit 23 of the local system 2 and the WAN 82, via the WAN 82 and via the network connection unit 13.

When the center device 10 receives the search request via the terminal interface 262, the record file reference processing unit 105 searches the management table 122 on the basis of the received search condition concerned. Then, a result of search is informed of to the terminal from which the request has been issued via the terminal interface 262.

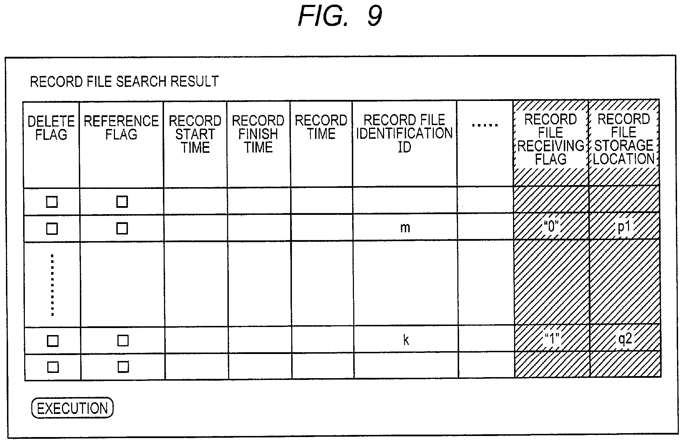

Then, a search result screen as illustrated in FIG. 9 is displayed on the display screen of the terminal. Here, although information (the record file receiving flag and the record file storage location) in a right-side hatched area of the illustrated search result screen is transmitted to the terminal, it is not displayed on the screen. The information on the record file receiving flag and the record file storage location is used as the one indicating an acquisition destination of the record file from the terminal in the next stage.

Information on the item corresponding to the record file identification ID which matches the search condition is displayed on the search result screen and "Reference Flag" and "Delete Flag" are also added in addition to the above information. When the manager selects (inputs " 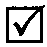 ") "Reference Flag" of the record file that the manager wants to refer to from the search result screen and operates the "Execution" button, the display screen shifts to the screen for an operation of acquiring the selected record file. The operations performed so far are the same in (A) and (B).

When the selected record file is not present in the center storage 12 and is present in the local storage 22 as illustrated in (A) (when the record file identification ID is "m"), the terminal gains access to the local device 20. An access request with the address p1 of the local storage attached is issued.

In the local device 20, when the access request is received via the terminal interface 262, the record file reference processing unit 205 transfers the address p1. The record file corresponding to the address p1 is read out from the local storage 22 and is sent to the record file reference processing unit 205. The record file reference processing unit 205 transmits the record file corresponding to the address p1 to the terminal from which the request has been issued via the terminal interface 262.

On the other hand, when the selected record file is present in the center storage 12 (when the record file identification ID is "k") as illustrated in (B), the terminal gains access to the center device 10 via the network connection unit 13. The access request with an address q2 of the center storage attached is issued. In the center device 10, when the access request is received via the terminal interface 262, the record file reference processing unit 105 reads out the record file corresponding to the address q2 from the center storage 12 and transmits the record file to the terminal from which the request has been issued via the terminal interface 262.

The selected record file is acquired by the terminal in the above-mentioned manner. The manager is allowed to reproduce the record file that the terminal has acquired and to listen to the contents thereof.

Incidentally, all the record files which have been created by the local systems 2 are finally collected in the center system 1 and are retained and accumulated in the center storage 12 and managed. Later search for the record file is made by performing the operations illustrated in (B).

Incidentally, in the above-mentioned operation of selecting the record file, when "Deletion" is selected, a deletion request is transmitted from the terminal to the center device 10 or the local device 20 and the record file concerned is deleted from the central storage 12 or the local storage 22.

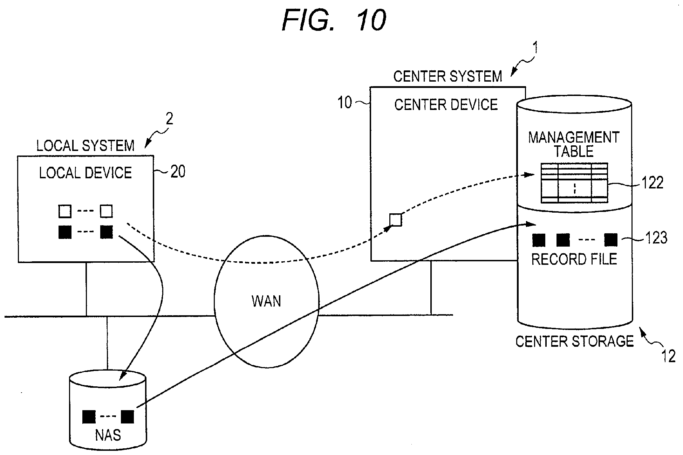

FIG. 10 illustrates a configuration example of a record file management system according to another embodiment.

In this embodiment, a record file which has been created by the record file creation unit 201 of the local device 20 is not stored in the local storage 22 and is stored in a NAS (Network Attached Storage) which is connected to the local system 2 over the network. That is, a record file which has been created by the record file creation unit 201 and is comparatively large in capacity is stored in the NAS and the attribute file thereof which has been created by the attribute file creation unit 202 is stored in the local storage 22 of the local device 20.

When the NAS is used as mentioned above, it is allowed to substitute a file sharing function that the NAS has for the record file reference processing unit 205 of the local device 20, the record file reference processing unit 205 is not installed.

As described above, according to the present embodiment, the attribute information of the record file which has been created in a local base is first transmitted to the center system 1 and is managed within it as the management information and then the record file is transmitted to the center system 1. In the above-mentioned case, since it is allowed to transmit the record file to the center system 1 utilizing the time zone such as the nighttime or the like which is different from the time that the record file has been created and that the bandwidth of the network is readily ensured for file transmission, it is allowed to reduce both of the required bandwidth of the network and the line cost.

In addition, since the record file which has been created within the local system 2 is stored in the local storage 22 for the fixed period, it is allowed to readily search for and refer to the record file in accordance with the request from the terminal 27. In case of the call center, although there are such needs that the manager and the operator want to listen to the contents of the telephone call record generated in the same base once more later for confirmation, it is allowed to readily meet such needs as mentioned above.

In the above-mentioned case, since the record file which is stored in the local storage 22 is directly read out by using the terminal 27 located in the local base and therefore downloading of the record file from the center system 1 over the WAN is not required unlike the case described in Japanese Patent Laid-Open No. 2010-219734, it is allowed to reduce the time taken for reproduction of the record file.

In addition, from the viewpoint of security, since it is allowed to send only the attribute file to the center system 1 and manage the file in the center system 1 without sending the record file to the center system 1 for a user who wants to hold the record file in the local base, central management of telephone call records is allowed while ensuring the security of the record file.

Although the preferred embodiments of the present invention have been described as mentioned above, the present invention is not limited to the above-mentioned embodiments and may be implemented by modifying it in a variety of ways.

For example, although in the above-mentioned embodiments, the management table 122 and the record files 123 are stored in the same storage, it is not necessarily required to store them in the same storage. The management table may be stored in a storage device which is comparatively small in storage capacity such as a semiconductor memory or the like which is included in a server acting as the center device and the record files may be stored in a large-capacity storage.

In addition, as the above-mentioned embodiments, the contact center management system that the telephone call record files generated in the call center are transmitted to the center system and retained and managed in the center system has been described by way of example. Here, the center system is not necessarily required to be something like a fixed host computer which has been determined in advance. According to an applied example, the center system may be, for example, a server or a computer which has been designated by a user who utilizes the call center or a company to which the operation of the call center is entrusted.

In addition, although in the above-mentioned embodiments, retention and management of the telephone call record files generated in the call center and/or the office have been described, the present invention is not limited to the management of record files. As another applied example, the present invention is also applicable to a situation that in an entrance and exit management system for room that personal information (the fingerprint, the vein and the ID card information) of each person who enters a building and/or an office room and exists therefrom is acquired to be used for personal authentication, an image file of the fingerprint and/or the vein taken by a camera and further an image file of a person's face image, a moving image thereof or the like also taken or captured by a camera or cameras are acquired and managed together with attribute information thereof.

In case of the management system for image files, the contents of the management table to be managed by the center device 10 are different from the contents in the management of the voice files. That is, since extended attribute information of the image file is different from the information in management of the voice files, the external number, the extension number, the operator name, claim flags, contract information and so forth which are peculiar to the call center in the above-mentioned embodiments are not used. For example, in case of an example of image file management for vein authentication, ID information and information such as a password and so forth of each person may be included in the extended attribute information.

In addition, although the file which is managed in the above-mentioned embodiments has been called the "record file", it may be called in a variety of ways. For example, it may be called an "archive log file" of recorded voices, images or moving images in some cases and it may be called a "contents file" of voices and images in other cases.

## Claims

1. A file management system that is adapted to transmit a record file (92, 123) of voice data of a telephone call which is created in a call center by a first device (2, 20) to a second device (1, 10) over a network (82), and to retain and manage the record file (92, 123) in a storage unit to allow a terminal (7, 17, 27) to refer to the record file (92, 123) retained in the storage unit,
the first device (2, 20) comprising:
a record file creation unit (201) for creating the record file (92, 123) including the voice data;
an attribute file creation unit (202) for creating an attribute file (91) including attribute information indicating the attribute of the record file (92, 123) and being characteristic to the telephone call of the record file (92, 123);
a first storage unit (22) for storing the record file (92, 123) which has been created by the record file creation unit (201);
a transfer control unit (204) for controlling transfer of the record file (92, 123) and the attribute file (91) to the second device (1, 10); and
an input/output unit (205) for controlling writing and reading-out of the record file (92, 123) into and from the first storage unit (22), and
the second device (1, 10) comprising:
an attribute processing unit (101) for creating management information including identification information used for identifying at least the record file (92, 123) and information on the first storage unit (22) or a second storage unit (12) which serves as a storage location of the record file (92, 123) on the basis of the attribute information in the attribute file (91) which has been transmitted and received from the first device (2, 20) over the network (82);
the second storage unit (12) for storing the management information which has been created by the attribute processing unit (101) on the basis of the attribute information and the record file (92, 123) which has been transmitted and received from the first device (2, 20) over the network (82); and
a reference processing unit (105) for reading out the management information stored in the second storage unit (12) and supplying the management information to the terminal (7, 17, 27) in accordance with a request from the terminal (7, 17, 27),
**characterised in that**
the transfer control unit (204) of the first device (2, 20) is adapted to transmit the attribute information corresponding to the record file (92, 123) stored in the first storage unit (22) to the second device (1, 10), and to thereafter transmit the record file (92, 123) corresponding to the attribute information which has already been transmitted to the second device (1, 10) and stored in the first storage unit (22) to the second device (1, 10) at a time which has been set in advance or in a time zone that a network load is small, and
when the second device (1, 10) has received the record file (92, 123) transmitted from the first device (2, 20), the attribute processing unit (101) of the second device (1, 10) is adapted to change the management information corresponding to the record file (92, 123) and stored in the second storage unit (12) so as to indicate that the record file (92, 123) has already been received and to change the information on the storage location of the record file (92, 123) to information in the second storage unit (12),
when the management information indicates that the target record file (92, 123) is stored in the second storage unit (12), the terminal (7, 17, 27) gains access to the second device (1, 10) and the reference processing unit (105) is adapted to read out the record file (92, 123) from the second storage unit (12) and transmit the record file (92, 123) to the terminal (7, 17, 27) in accordance with a request from the terminal (7, 17, 27), and
when the management information indicates that the target record file (92, 123) has not yet been transmitted to the second device (1, 10) and is still stored in the first storage unit (22) of the first device (2, 20), the terminal (7, 17, 27) gains access to the first device (2, 20) and the input/output unit (205) is adapted to read out the target record file (92, 123) from the first storage unit (22) and to transmit the target record file (92, 123) to the terminal (7, 17, 27).

2. The file management system according to claim 1, wherein the transfer control unit (204) of the first device (2, 20) is adapted to control transfer of the corresponding attribute information to the second device (1, 10) every time the record file creation unit (201) creates the record file (92, 123).

3. The file management system according to claim 1 or 2, adapted to carry out processing such that the attribute file (91) that the attribute file creation unit (202) has created is temporarily stored in the first storage unit (22), thereafter one or a plurality of the attribute file(s) (91) stored in the first storage unit (22) is/are read out every fixed time, and the transfer control unit (204) of the first device (2, 20) is adapted to control transfer of the attribute file (91) to the second device (1, 10).

4. The file management system according to any preceding claim, wherein
the second storage unit (12) is adapted to store a management table (122) that manages an identification ID for identifying the record file (92, 123), an address for specifying the first storage unit (22) that the record file (92, 123) is stored and a receiving flag indicating whether the first device (2, 20) has received the record file (92, 123) at least as the management information, and
the attribute processing unit (101) is adapted to register the identification ID for identifying the recording file which is acquired from the attribute information and the address of the first storage unit (22) that the record file (92, 123) is stored into the management table (122), and, when the first device (2, 20) has received the record file (92, 123), to change the receiving flag of the management information corresponding to the record file (92, 123) within the management table (122) to a received state.

5. The file management system according to any preceding claim, wherein
the first device (2, 20) is connected to a telephone system (21) that is adapted to handle reception of and response to a telephone set which is connected over a public telephone network (81), and
the record file creation unit (201) and the attribute file creation unit (202) are adapted to create the record file (92, 123) generated in the telephone system (21) and the attribute information of the record file (92, 123).

6. The file management system according to any preceding claim, wherein
the storage unit for storing the management information and the storage unit for storing the record file (92, 123) of the second storage unit (12) are configured by different storage units, and/or
the first storage unit (22) is an NAS (Network Attached Storage) which is connected to the first device (2, 20).

7. The file management system according to any preceding claim, wherein
still after the record file (92, 123) has been transferred to the second device (1, 10), the record file (92, 123) is remained in the first storage unit (22) for a fixed period, and
the reference processing unit (105) is adapted to read out the record file (92, 123) stored in the first storage unit (22) and to transmit the record file (92, 123) to the terminal (7, 17, 27) in accordance with the request from the terminal (7, 17, 27).

8. A file management method of transmitting a record file (92, 123) of voice data of a telephone call created in a call center by a first device (2, 20) to a second device (1, 10) over a network (82), retaining the record file (92, 123) in a storage unit and managing the record file (92, 123) in the storage unit so as to allow a terminal (7, 17, 27) to refer to the record file (92, 123) stored in the storage unit,
comprising, in the first device (2, 20):
a record file creation step of creating the record file (92, 123) including the voice data;
an attribute file creation step of creating an attribute file (91) including attribute information indicating the attribute of the record file (92, 123) and being characteristic to the telephone call of the record file (92, 123);
a first storage step of storing the record file (92, 123) created in the record file creation step in a first storage unit (22);
a transfer control step of controlling transfer of the record file (92, 123) and the attribute file (91) to the second device (1, 10); and
an input/output step of controlling writing and reading out of the record file (92, 123) into and from the first storage unit (22), and
further comprising, in the second device (1, 10):
an attribute processing step of creating management information including identification information used for identifying at least the record file (92, 123) and information on the first storage unit (22) or a second storage unit (12) which serves as a storage location of the record file (92, 123) on the basis of attribute information of the attribute file (91) which has been transmitted and received from the first device (2, 20) over the network (82);
a second storage step of storing the management information created on the basis of the attribute information in the attribute processing step and the record file (92, 123) which has been transmitted and received from the first device (2, 20) over the network (82); and
a reference processing step of reading out the management information stored in the second storage unit (12) and supplying the management information to the terminal (7, 17, 27) in accordance with a request from the terminal (7, 17, 27),
**characterised in that**
in the transfer control step, the attribute information corresponding to the record file (92, 123) stored in the first storage unit (22) is transmitted to the second device (1, 10), and thereafter the record file (92, 123) corresponding to the attribute information which has already been transmitted is transmitted to the second device (1, 10) and stored in the first storage unit (22) to the second device (1, 10) at a time which has been set in advance or in a time zone that a network load is small,
in the attribute processing step, when the second device (1, 10) has received the record file (92, 123) transmitted from the first device (2, 20), the management information corresponding to the record file (92, 123) and stored in the second storage unit (12) is changed so as to indicate that the record file (92, 123) has already been received and the information on the storage location of the record file (92, 123) is changed to information in the second storage unit (12),
in the reference processing step, when the management information indicates that the target record file (92, 123) is stored in the second storage unit (12), the terminal (7, 17, 27) gains access to the second device (1, 10) and the record file (92, 123) is read out from the second storage unit (12) and is transmitted to the terminal (7, 17, 27) in accordance with the request from the terminal (7, 17, 27), and
when the management information indicates that the target record file (92, 123) has not yet been transmitted to the second device (1, 10) and is still stored in the first storage unit (22) of the first device (2, 20), the terminal (7, 17, 27) gains access to the first device (2, 20) and the target record file (92, 123) is read out from the first storage unit (22) and is transmitted to the terminal (7, 17, 27).

9. A file management program that makes a server execute the respective steps implementing the file management method according to claim 8 to manage a record file (92, 123).

## Patentansprüche

1. Dateiverwaltungssystem, das dazu ausgelegt ist, eine Aufzeichnungsdatei (92, 123) von Sprachdaten eines Telefongesprächs, das durch ein Callcenter erzeugt wurde, durch eine erste Vorrichtung (2, 20) über ein Netzwerk (82) zu einer zweiten Vorrichtung (1, 10) zu übertragen, und die Aufzeichnungsdatei (92, 123) in einer Speichereinheit zu behalten und zu verwalten, um einem Endgerät (7, 17, 27) zu erlauben, auf die in der Speichereinheit behaltene Aufzeichnungsdatei (92, 123) zuzugreifen,
wobei die erste Vorrichtung (2, 20) aufweist:
eine Aufzeichnungsdatei-Erzeugungseinheit (201) zum Erzeugen der Aufzeichnungsdatei (92, 123) mit den Sprachdaten,
eine Attributdatei-Erzeugungseinheit (202) zum Erzeugen einer Attributdatei (91) mit Attributinformation, die das Attribut der Aufzeichnungsdatei (92, 123) angibt und charakteristisch für das Telefongespräch der Aufzeichnungsdatei (92, 123) ist,
eine erste Speichereinheit (22) zum Speichern der Aufzeichnungsdatei (92, 123), die durch die Aufzeichnungsdatei-Erzeugungseinheit (201) erzeugt wurde,
eine Transfersteuereinheit (204) zum Steuern des Transfers der Aufzeichnungsdatei (92, 123) und der Attributdatei (91) zu der zweiten Vorrichtung (1, 10), und
eine Eingabe/Ausgabe-Einheit (205) zum Steuern des Schreibens und Auslesens der Aufzeichnungsdatei (92, 123) in die und aus der ersten Speichereinheit (22), und
wobei die zweite Vorrichtung (1, 10) aufweist:
eine Attributverarbeitungseinheit (101) zum Erzeugen von Verwaltungsinformation mit Identifikationsinformation, die zum Identifizieren wenigstens der Aufzeichnungsdatei (92, 123) verwendet wird, und Information über die erste Speichereinheit (22) oder eine zweite Speichereinheit (12), die als ein Speicherort der Aufzeichnungsdatei (92, 123) dient, auf Basis der Attributinformation in der Attributdatei (91), die von der ersten Vorrichtung (2, 20) übertragen und über das Netzwerk (82) empfangen wurde,
die zweite Speichereinheit (12) zum Speichern der Verwaltungsinformation, die durch die Attributverarbeitungseinheit (101) auf Basis der Attributinformation erzeugt wurde, und der Aufzeichnungsdatei (92, 123), die von der ersten Vorrichtung (2, 20) übertragen und über das Netzwerk (82) empfangen wurde, und
eine Referenzverarbeitungseinheit (105) zum Auslesen der in der zweiten Speichereinheit (12) gespeicherten Verwaltungsinformation und zum Zuführen der Verwaltungsinformation zu dem Endgerät (7, 17, 27) gemäß einer Anfrage von dem Endgerät (7, 17, 27),
**dadurch gekennzeichnet, dass**
die Transfersteuereinheit (204) der ersten Vorrichtung (2, 20) dazu ausgelegt ist, die Attributinformation zu der zweiten Vorrichtung (1, 10) zu übertragen, die der in der ersten Speichereinheit (22) gespeicherten Aufzeichnungsdatei (92, 123) entspricht, und anschließend die Aufzeichnungsdatei (92, 123), die der Attributinformation entspricht, die bereits zu der zweiten Vorrichtung (1, 10) übertragen und in der ersten Speichereinheit (22) gespeichert wurde, zu der zweiten Vorrichtung (1, 10) zu einer Zeit zu übertragen, die zuvor festgelegt wurde, oder in einer Zeitzone, während der eine Netzwerkbelastung klein ist, und
wenn die zweite Vorrichtung (1, 10) die von der ersten Vorrichtung (2, 20) übertragene Aufzeichnungsdatei (92, 123) empfangen hat, die Attributverarbeitungseinheit (101) der zweiten Vorrichtung (1, 10) dazu ausgelegt ist, die Verwaltungsinformation zu ändern, die der Aufzeichnungsdatei (92, 123) entspricht und in der zweiten Speichereinheit (12) gespeichert ist, um anzugeben, dass die Aufzeichnungsdatei (92, 123) bereits empfangen wurde, und die Information über den Speicherort der Aufzeichnungsdatei (92, 123) auf Information in der zweiten Speichereinheit (12) zu ändern,
wenn die Verwaltungsinformation angibt, dass die Zielaufzeichnungsdatei (92, 123) in der zweiten Speichereinheit (12) gespeichert ist, das Endgerät (7, 17, 27) Zugriff auf die zweite Vorrichtung (1, 10) erhält, und die Referenzverarbeitungseinheit (105) dazu ausgelegt ist, die Aufzeichnungsdatei (92, 123) aus der zweiten Speichereinheit (12) auszulesen und die Aufzeichnungsdatei (92, 123) gemäß einer Anfrage von dem Endgerät (7, 17, 27) zu dem Endgerät (7, 17, 27) zu übertragen, und
wenn die Verwaltungsinformation angibt, dass die Zielaufzeichnungsdatei (92, 123) noch nicht zu der zweiten Vorrichtung (1, 10) übertragen wurde und immer noch in der ersten Speichereinheit (22) der ersten Vorrichtung (2, 20) gespeichert ist, das Endgerät (7, 17, 27) Zugriff auf die erste Vorrichtung (2, 20) erhält, und die Eingabe/Ausgabe-Einheit (205) dazu ausgelegt ist, die Zielaufzeichnungsdatei (92, 123) aus der ersten Speichereinheit (22) auszulesen und die Zielaufzeichnungsdatei (92, 123) zu dem Endgerät (7, 17, 27) zu übertragen.

2. Dateiverwaltungssystem nach Anspruch 1, wobei die Transfersteuereinheit (204) der ersten Vorrichtung (2, 20) dazu ausgelegt ist, den Transfer der entsprechenden Attributinformation zu der zweiten Vorrichtung (1, 10) immer dann zu steuern, wenn die Aufzeichnungsdatei-Erzeugungseinheit (201) die Aufzeichnungsdatei (92, 123) erzeugt.

3. Dateiverwaltungssystem nach Anspruch 1 oder 2, das dazu ausgelegt ist, eine derartige Verarbeitung durchzuführen, dass die von der Attributdatei-Erzeugungseinheit (202) erzeugte Attributdatei (91) temporär in der ersten Speichereinheit (22) gespeichert wird, und anschließend eine oder mehrere in der ersten Speichereinheit (22) gespeicherte Attributdateien (91) zu jeder festgelegten Zeit ausgelesen werden, und die Transfersteuereinheit (204) der ersten Vorrichtung (2, 20) dazu ausgelegt ist, den Transfer der Attributdatei (91) zu der zweiten Vorrichtung (1, 10) zu steuern.

4. Dateiverwaltungssystem nach einem der vorstehenden Ansprüche, wobei
die zweite Speichereinheit (12) dazu ausgelegt ist, eine Verwaltungstabelle (122) zu speichern, die eine Identifikations-ID zum Identifizieren der Aufzeichnungsdatei (92, 123), eine Adresse zum Spezifizieren der ersten Speichereinheit (22), an der die Aufzeichnungsdatei (92, 123) gespeichert ist, und einen Empfangsmarker zu speichern, der angibt, ob die erste Vorrichtung (2, 20) die Aufzeichnungsdatei (92, 123) wenigstens als die Verwaltungsinformation empfangen hat, und
die Attributverarbeitungseinheit (101) dazu ausgelegt ist, die Identifikations-ID zum Identifizieren der aus der Attributinformation gewonnenen Aufzeichnungsdatei und die Adresse der ersten Speichereinheit (22), an der die Aufzeichnungsdatei (92, 123) gespeichert ist, in die Verwaltungstabelle (122) zu registrieren und, wenn die erste Vorrichtung (2, 20) die Aufzeichnungsdatei (92, 123) empfangen hat, den Empfangsmarker der Verwaltungsinformation, der der Aufzeichnungsdatei (92, 123) entspricht, innerhalb der Verwaltungstabelle (122) auf einen Empfangsstatus zu ändern.

5. Dateiverwaltungssystem nach einem der vorstehenden Ansprüche, wobei
die erste Vorrichtung (2, 20) an ein Telefonsystem (21) angeschlossen ist, das dazu ausgelegt ist, den Empfang und die Erwiderung eines Telefonsets zu handhaben, das über ein öffentliches Telefonnetz (81) angeschlossen ist, und
die Aufzeichnungsdatei-Erzeugungseinheit (201) und die Attributdatei-Erzeugungseinheit (202) dazu ausgelegt sind, die in dem Telefonsystem (21) generierte Aufzeichnungsdatei (92, 123) und die Attributinformation der Aufzeichnungsdatei (92, 123) zu erzeugen.

6. Dateiverwaltungssystem nach einem der vorstehenden Ansprüche, wobei
die Speichereinheit zum Speichern der Verwaltungsinformation und die Speichereinheit zum Speichern der Aufzeichnungsdatei (92, 123) der zweiten Speichereinheit (12) durch verschiedene Speichereinheiten konfiguriert sind, und/oder
die erste Speichereinheit (22) ein NAS (Network Attached Storage) ist, das an die erste Vorrichtung (2, 20) angeschlossen ist.

7. Dateiverwaltungssystem nach einem der vorstehenden Ansprüche, wobei
nachdem die Aufzeichnungsdatei (92, 123) zu der zweiten Vorrichtung (1, 10) übertragen wurde, die Aufzeichnungsdatei (92, 123) für eine feste Dauer in der ersten Speichereinheit (22) verbleibt, und
die Referenzverarbeitungseinheit (105) dazu ausgelegt ist, die in der ersten Speichereinheit (22) gespeicherte Aufzeichnungsdatei (92, 123) auszulesen und die Aufzeichnungsdatei (92, 123) gemäß der Anfrage von dem Endgerät (7, 17, 27) zu dem Endgerät (7, 17, 27) zu übertragen.

8. Dateiverwaltungsverfahren zum Übertragen einer Aufzeichnungsdatei (92, 123) von Sprachdaten eines Telefongesprächs, das durch ein Callcenter erzeugt wurde, durch eine erste Vorrichtung (2, 20) über ein Netzwerk (82) zu einer zweiten Vorrichtung (1, 10), zum Behalten der Aufzeichnungsdatei (92, 123) in einer Speichereinheit und zum Verwalten der Aufzeichnungsdatei (92, 123) in der Speichereinheit, um einem Endgerät (7, 17, 27) zu erlauben, auf die in der Speichereinheit gespeicherte Aufzeichnungsdatei (92, 123) zuzugreifen,
aufweisend, in der ersten Vorrichtung (2, 20):
einen Aufzeichnungsdatei-Erzeugungsschritt zum Erzeugen der Aufzeichnungsdatei (92, 123) mit den Sprachdaten,
einen Attributdatei-Erzeugungsschritt zum Erzeugen einer Attributdatei (91) mit Attributinformation, die das Attribut der Aufzeichnungsdatei (92, 123) angibt und charakteristisch für das Telefongespräch der Aufzeichnungsdatei (92, 123) ist,
einen ersten Speicherschritt (22) zum Speichern der Aufzeichnungsdatei (92, 123), die durch die Aufzeichnungsdatei-Erzeugungseinheit (201) erzeugt wurde,
einen Transfersteuerschritt zum Steuern des Transfers der Aufzeichnungsdatei (92, 123) und der Attributdatei (91) zu der zweiten Vorrichtung (1, 10), und
einen Eingabe/Ausgabe-Schritt zum Steuern des Schreibens und Auslesens der Aufzeichnungsdatei (92, 123) in die und aus der ersten Speichereinheit (22), und
ferner aufweisend, in der zweiten Vorrichtung (1, 10):
einen Attributverarbeitungsschritt zum Erzeugen von Verwaltungsinformation mit Identifikationsinformation, die zum Identifizieren wenigstens der Aufzeichnungsdatei (92, 123) verwendet wird, und Information über die erste Speichereinheit (22) oder eine zweite Speichereinheit (12), die als ein Speicherort der Aufzeichnungsdatei (92, 123) dient, auf Basis der Attributinformation in der Attributdatei (91), die von der ersten Vorrichtung (2, 20) übertragen und über das Netzwerk (82) empfangen wurde,
einen zweiten Speicherschritt zum Speichern der Verwaltungsinformation, die in dem Attributverarbeitungsschritt auf Basis der Attributinformation erzeugt wurde, und der Aufzeichnungsdatei (92, 123), die von der ersten Vorrichtung (2, 20) übertragen und über das Netzwerk (82) empfangen wurde, und
einen Referenzverarbeitungsschritt zum Auslesen der in der zweiten Speichereinheit (12) gespeicherten Verwaltungsinformation und zum Zuführen der Verwaltungsinformation zu dem Endgerät (7, 17, 27) gemäß einer Anfrage von dem Endgerät (7, 17, 27),
**dadurch gekennzeichnet, dass**
in dem Transfersteuerschritt, die Attributinformation zu der zweiten Vorrichtung (1, 10) übertragen wird, die der in der ersten Speichereinheit (22) gespeicherten Aufzeichnungsdatei (92, 123) entspricht, und anschließend die Aufzeichnungsdatei (92, 123), die der Attributinformation entspricht, die bereits zu der zweiten Vorrichtung (1, 10) übertragen und in der ersten Speichereinheit (22) gespeichert wurde, zu der zweiten Vorrichtung (1, 10) zu einer Zeit übertragen wird, die zuvor festgelegt wurde, oder in einer Zeitzone, während der eine Netzwerkbelastung klein ist, und
in dem Attributverarbeitungsschritt, wenn die zweite Vorrichtung (1, 10) die von der ersten Vorrichtung (2, 20) übertragene Aufzeichnungsdatei (92, 123) empfangen hat, die Verwaltungsinformation, die der Aufzeichnungsdatei (92, 123) entspricht und in der zweiten Speichereinheit (12) gespeichert ist, geändert wird, um anzugeben, dass die Aufzeichnungsdatei (92, 123) bereits empfangen wurde, und die Information über den Speicherort der Aufzeichnungsdatei (92, 123) auf Information in der zweiten Speichereinheit (12) geändert wird,
in dem Referenzverarbeitungsschritt, wenn die Verwaltungsinformation angibt, dass die Zielaufzeichnungsdatei (92, 123) in der zweiten Speichereinheit (12) gespeichert ist, das Endgerät (7, 17, 27) Zugriff auf die zweite Vorrichtung (1, 10) erhält, und die Aufzeichnungsdatei (92, 123) aus der zweiten Speichereinheit (12) ausgelesen und gemäß einer Anfrage von dem Endgerät (7, 17, 27) zu dem Endgerät (7, 17, 27) übertragen wird, und
wenn die Verwaltungsinformation angibt, dass die Zielaufzeichnungsdatei (92, 123) noch nicht zu der zweiten Vorrichtung (1, 10) übertragen wurde und immer noch in der ersten Speichereinheit (22) der ersten Vorrichtung (2, 20) gespeichert ist, das Endgerät (7, 17, 27) Zugriff auf die erste Vorrichtung (2, 20) erhält, und die Zielaufzeichnungsdatei (92, 123) aus der ersten Speichereinheit (22) ausgelesen und zu dem Endgerät (7, 17, 27) übertragen wird.

9. Dateiverwaltungsprogramm, das einen Server dazu veranlasst, entsprechende Schritte auszuführen, die das Dateiverwaltungsverfahren gemäß Anspruch 8 implementieren, um eine Aufzeichnungsdatei (92, 123) zu verwalten.

## Revendications

1. Système de gestion de fichiers qui est adapté à transmettre un fichier d'enregistrement (92, 123) de données vocales d'un appel téléphonique qui est créé dans un centre d'appels par un premier dispositif (2, 20) à un deuxième dispositif (1, 10) sur un réseau (82), et pour conserver et gérer le fichier d'enregistrement (92, 123) dans une unité de stockage pour permettre à un terminal (7, 17, 27) de se référer au fichier d'enregistrement (92, 123) conservé dans l'unité de stockage,
le premier dispositif (2, 20) comprenant :
une unité (201) de création de fichier d'enregistrement pour créer le fichier d'enregistrement (92, 123) incluant les données vocales ;
une unité (202) de création de fichier d'attribut pour créer un fichier d'attribut (91) incluant des informations d'attribut indiquant l'attribut du fichier d'enregistrement (92, 123) et étant caractéristique de l'appel téléphonique du fichier d'enregistrement (92, 123) ;
une première unité de stockage (22) pour stocker le fichier d'enregistrement (92, 123) qui a été créé par l'unité (201) de création de fichier d'enregistrement ;
une unité (204) de contrôle de transfert pour contrôler un transfert du fichier d'enregistrement (92, 123) et du fichier d'attribut (91) au deuxième dispositif (1, 10) ; et
une unité (205) d'entrée/sortie pour contrôler l'écriture et la lecture du fichier d'enregistrement (92, 123) dans et de la première unité de stockage (22), et
le deuxième dispositif (1, 10) comprenant :
une unité (101) de traitement d'attribut pour créer des informations de gestion incluant des informations d'identification utilisées pour identifier au moins le fichier d'enregistrement (92, 123) et des informations sur la première unité de stockage (22) ou une deuxième unité de stockage (12) qui sert comme un emplacement de stockage du fichier d'enregistrement (92, 123) sur la base des informations d'attribut dans le fichier d'attribut (91) qui a été transmis et reçu depuis le premier dispositif (2, 20) sur le réseau (82) ;
la deuxième unité de stockage (12) pour stocker les informations de gestion qui ont été créées par l'unité (101) de traitement d'attribut sur la base des informations d'attribut et du fichier d'enregistrement (92, 123) qui a été transmis et reçu depuis le premier dispositif (2, 20) sur le réseau (82) ; et
une unité (105) de traitement de référence pour lire les informations de gestion stockées dans la deuxième unité de stockage (12) et fournir les informations de gestion au terminal (7, 17, 27) conformément à une demande provenant du terminal (7, 17, 27),
**caractérisé en ce que**
l'unité (204) de contrôle de transfert du premier dispositif (2, 20) est adaptée à transmettre les informations d'attribut correspondant au fichier d'enregistrement (92, 123) stocké dans la première unité de stockage (22) au deuxième dispositif (1, 10), et à ensuite transmettre le fichier d'enregistrement (92, 123) correspondant aux informations d'attribut qui ont déjà été transmises au deuxième dispositif (1, 10) et stockées dans la première unité de stockage (22) au deuxième dispositif (1, 10) à un moment qui a été fixé au préalable ou dans une zone de temps où une charge réseau est petite, et
lorsque le deuxième dispositif (1, 10) a reçu le fichier d'enregistrement (92, 123) transmis depuis le premier dispositif (2, 20), l'unité (101) de traitement d'attribut du deuxième dispositif (1, 10) est adaptée à changer les informations de gestion correspondant au fichier d'enregistrement (92, 123) et stockées dans la deuxième unité de stockage (12) de façon à indiquer que le fichier d'enregistrement (92, 123) a déjà été reçu et à changer les informations sur l'emplacement de stockage du fichier d'enregistrement (92, 123) en des informations dans la deuxième unité de stockage (12),
lorsque les informations de gestion indiquent que le fichier d'enregistrement (92, 123) cible est stocké dans la deuxième unité de stockage (12), le terminal (7, 17, 27) reçoit l'accès au deuxième dispositif (1, 10) et l'unité (105) de traitement de référence est adaptée à lire le fichier d'enregistrement (92, 123) dans la deuxième unité de stockage (12) et transmettre le fichier d'enregistrement (92, 123) au terminal (7, 17, 27) conformément à une demande provenant du terminal (7, 17, 27), et lorsque les informations de gestion indiquent que le fichier d'enregistrement (92, 123) cible n'a pas encore été transmis au deuxième dispositif (1, 10) et est encore stocké dans la première unité de stockage (22) du premier dispositif (2, 20), le terminal (7, 17, 27) reçoit l'accès au premier dispositif (2, 20) et l'unité (205) d'entrée/sortie est adaptée à lire le fichier d'enregistrement (92, 123) cible dans la première unité de stockage (22) et à transmettre le fichier d'enregistrement (92, 123) cible au terminal (7, 17, 27).

2. Système de gestion de fichiers selon la revendication 1, dans lequel l'unité (204) de contrôle de transfert du premier dispositif (2, 20) est adaptée à contrôler un transfert des informations d'attribut correspondantes au deuxième dispositif (1, 10) à chaque fois que l'unité (201) de création de fichier d'enregistrement crée le fichier d'enregistrement (92, 123).

3. Système de gestion de fichiers selon la revendication 1 ou 2, adapté à exécuter un traitement de telle manière que le fichier d'attribut (91) que l'unité (202) de création de fichier d'attribut a créé est temporairement stocké dans la première unité de stockage (22), ensuite un ou une pluralité des fichier(s) d'attribut (91) stocké(s) dans la première unité de stockage (22) est/sont lu(s) à chaque moment fixé, et l'unité (204) de contrôle de transfert du premier dispositif (2, 20) est adaptée à contrôler un transfert du fichier d'attribut (91) au deuxième dispositif (1, 10).

4. Système de gestion de fichiers selon une quelconque revendication précédente, dans lequel
la deuxième unité de stockage (12) est adaptée à stocker une table de gestion (122) qui gère un ID d'identification pour identifier le fichier d'enregistrement (92, 123), une adresse pour spécifier la première unité de stockage (22) où le fichier d'enregistrement (92, 123) est stocké et un fanion de réception indiquant si le premier dispositif (2, 20) a reçu le fichier d'enregistrement (92, 123) au moins comme les informations de gestion, et
l'unité (101) de traitement d'attribut est adaptée à enregistrer l'ID d'identification pour identifier le fichier d'enregistrement qui est acquis à partir des informations d'attribut et l'adresse de la première unité de stockage (22) où le fichier d'enregistrement (92, 123) est stocké dans la table de gestion (122), et, lorsque le premier dispositif (2, 20) a reçu le fichier d'enregistrement (92, 123), à changer le fanion de réception des informations de gestion correspondant au fichier d'enregistrement (92, 123) au sein de la table de gestion (122) à un état reçu.

5. Système de gestion de fichiers selon une quelconque revendication précédente, dans lequel
le premier dispositif (2, 20) est connecté à un système téléphonique (21) qui est adapté à gérer la réception d'un et la réponse à un poste téléphonique qui est connecté sur un réseau téléphonique public (81), et
l'unité (201) de création de fichier d'enregistrement et l'unité (202) de création de fichier d'attribut sont adaptées à créer le fichier d'enregistrement (92, 123) généré dans le système téléphonique (21) et les informations d'attribut du fichier d'enregistrement (92, 123).

6. Système de gestion de fichiers selon une quelconque revendication précédente, dans lequel
l'unité de stockage pour stocker les informations de gestion et l'unité de stockage pour stocker le fichier d'enregistrement (92, 123) de la deuxième unité de stockage (12) sont configurées par différentes unités de stockage, et/ou
la première unité de stockage (22) est un NAS (stockage en réseau) qui est connecté au premier dispositif (2, 20).

7. Système de gestion de fichiers selon une quelconque revendication précédente, dans lequel
encore après que le fichier d'enregistrement (92, 123) a été transféré au deuxième dispositif (1, 10), le fichier d'enregistrement (92, 123) est conservé dans la première unité de stockage (22) pour une période fixée, et
l'unité (105) de traitement de référence est adaptée à lire le fichier d'enregistrement (92, 123) stocké dans la première unité de stockage (22) et à transmettre le fichier d'enregistrement (92, 123) au terminal (7, 17, 27) conformément à la demande provenant du terminal (7, 17, 27).

8. Procédé de gestion de fichiers pour transmettre un fichier d'enregistrement (92, 123) de données vocales d'un appel téléphonique créé dans un centre d'appels par un premier dispositif (2, 20) à un deuxième dispositif (1, 10) sur un réseau (82), conserver le fichier d'enregistrement (92, 123) dans une unité de stockage et gérer le fichier d'enregistrement (92, 123) dans l'unité de stockage de manière à permettre à un terminal (7, 17, 27) de se référer au fichier d'enregistrement (92, 123) stocké dans l'unité de stockage,
comprenant, dans le premier dispositif (2, 20) :
une étape de création de fichier d'enregistrement pour créer le fichier d'enregistrement (92, 123) incluant les données vocales ;
une étape de création de fichier d'attribut pour créer un fichier d'attribut (91) incluant des informations d'attribut indiquant l'attribut du fichier d'enregistrement (92, 123) et étant caractéristique de l'appel téléphonique du fichier d'enregistrement (92, 123) ;
une première étape de stockage pour stocker le fichier d'enregistrement (92, 123) créé à l'étape de création de fichier d'enregistrement dans une première unité de stockage (22) ;
une étape de contrôle de transfert pour contrôler un transfert du fichier d'enregistrement (92, 123) et du fichier d'attribut (91) au deuxième dispositif (1, 10) ; et
une étape d'entrée/sortie pour contrôler l'écriture et la lecture du fichier d'enregistrement (92, 123) dans et de la première unité de stockage (22), et
comprenant en outre, dans le deuxième dispositif (1, 10) :
une étape de traitement d'attribut pour créer des informations de gestion incluant des informations d'identification utilisées pour identifier au moins le fichier d'enregistrement (92, 123) et des informations sur la première unité de stockage (22) ou une deuxième unité de stockage (12) qui sert comme un emplacement de stockage du fichier d'enregistrement (92, 123) sur la base des informations d'attribut du fichier d'attribut (91) qui a été transmis et reçu depuis le premier dispositif (2, 20) sur le réseau (82) ;
une deuxième étape de stockage pour stocker les informations de gestion créées sur la base des informations d'attribut à l'étape de traitement d'attribut et le fichier d'enregistrement (92, 123) qui a été transmis et reçu depuis le premier dispositif (2, 20) sur le réseau (82) ; et
une étape de traitement de référence pour lire les informations de gestion stockées dans la deuxième unité de stockage (12) et fournir les informations de gestion au terminal (7, 17, 27) conformément à une demande provenant du terminal (7, 17, 27),
**caractérisé en ce que**
à l'étape de contrôle de transfert, les informations d'attribut correspondant au fichier d'enregistrement (92, 123) stocké dans la première unité de stockage (22) sont transmises au deuxième dispositif (1, 10), et ensuite le fichier d'enregistrement (92, 123) correspondant aux informations d'attribut qui ont déjà été transmises au deuxième dispositif (1, 10) et stockées dans la première unité de stockage (22) est transmis au deuxième dispositif (1, 10) à un moment qui a été fixé au préalable ou dans une zone de temps où une charge réseau est petite,
à l'étape de traitement d'attribut, lorsque le deuxième dispositif (1, 10) a reçu le fichier d'enregistrement (92, 123) transmis depuis le premier dispositif (2, 20), les informations de gestion correspondant au fichier d'enregistrement (92, 123) et stockées dans la deuxième unité de stockage (12) sont changées de façon à indiquer que le fichier d'enregistrement (92, 123) a déjà été reçu et les informations sur l'emplacement de stockage du fichier d'enregistrement (92, 123) sont changées en des informations dans la deuxième unité de stockage (12),
à l'étape de traitement de référence, lorsque les informations de gestion indiquent que le fichier d'enregistrement (92, 123) cible est stocké dans la deuxième unité de stockage (12), le terminal (7, 17, 27) reçoit l'accès au deuxième dispositif (1, 10) et le fichier d'enregistrement (92, 123) est lu dans la deuxième unité de stockage (12) et est transmis au terminal (7, 17, 27) conformément à la demande provenant du terminal (7, 17, 27), et
lorsque les informations de gestion indiquent que le fichier d'enregistrement (92, 123) cible n'a pas encore été transmis au deuxième dispositif (1, 10) et est encore stocké dans la première unité de stockage (22) du premier dispositif (2, 20), le terminal (7, 17, 27) reçoit l'accès au premier dispositif (2, 20) et le fichier d'enregistrement (92, 123) cible est lu dans la première unité de stockage (22) et est transmis au terminal (7, 17, 27).

9. Programme de gestion de fichiers qui fait en sorte qu'un serveur exécute les étapes respectives mettant en oeuvre le procédé de gestion de fichiers selon la revendication 8 pour gérer un fichier d'enregistrement (92, 123).
